# EUROPEAN PATENT SPECIFICATION

(11) **EP 3 512 228 B1**
(45) Date of publication and mention of the grant of the patent: **19.07.2023**
(21) Application number: 18150999.3
(22) Date of filing: 10.01.2018
(51) Int. Cl.: H04L 9/40, G06Q 20/14, G06Q 20/36, H04L 9/32, H04W 12/02, H04L 9/00

(54) **METHOD FOR SECURELY PROVIDING ANALYTICS RESULT AND SENSOR DEVICE TO DETERMINE AUTHENTIC DATA**
VERFAHREN ZUR SICHEREN BEREITSTELLUNG VON ANALYSEERGEBNISSEN UND SENSORVORRICHTUNG ZUR BESTIMMUNG AUTHENTISCHER DATEN
PROCÉDÉ PERMETTANT DE FOURNIR DE MANIÈRE SÉCURISÉE DES RÉSULTATS D'ANALYSE ET DISPOSITIF DE DÉTECTION POUR DÉTERMINER DES DONNÉES AUTHENTIQUES

(43) Date of publication of application: 17.07.2019
(60) Divisional application: 22192443.4
(73) Proprietor: E.ON Digital Technology GmbH, 30457 Hannover (DE)
(72) Inventor: Kühnel, Thorsten, 30169 Hannover (DE); Sommerkamp, Katharina, 30169 Hannover (DE); Kellerer, Elisabeth Dr., 30139 Hannover (DE); Ord, Nicholas, 30169 Hannover (DE); de Durfort, Flore, 30169 Hannover (DE)
(74) Representative: Bals & Vogel Patentanwälte PartGmbB

(56) References cited:
- WO-A1-2017/190795
- US-A1- 2006 015 287

## Description

The present invention relates to a method for securely providing analytics results based on, preferably authenticated, data from a source to a single recipient as well as a sensor device for determining authentic data to be used in said method.

With the advance of various devices in daily use as well as dedicated sensor elements being connected to the internet and streaming various types of information about their usage and/or their surroundings to internet service providers for further processing and for offering services like remotely controlling a smart home, the behavior of a user owning these devices and sensor elements can be traced with ever-increasing precision.

While users might fancy the immediate benefits provided by the devices of the so-called internet-of-things (I-o-T), a potentially unlimited concomitant transparency of their behavior is usually not desired. In the past, said transparency was either accepted in return for e.g. free services or attempted to be avoided by relying on the various internet service providers not to share the data received from a part of the user's devices so that no full set of user's data was collected in a single place.

However, in recent times, business' and users' interest has aroused to provide service providers with predetermined information about a user's behavior based on data collected by I-o-T-devices in exchange for agreed benefits. For example, the premiums of an insurance might be lowered if a healthy lifestyle can be sufficiently verified by the data collected, but readjusted if a deviation from said lifestyle is detected.

In order to do this, currently, the user has to configure his devices to send the required data to the service provider offering e.g. a discount in return. While the user can assume said service provider is using the data only for the intended purpose, there is no guarantee that the data is not passed on to another party. In other words, the user cannot conclusively define who has access to his data.

At the same time, the service provider cannot be sure that the user provides said data solely to him e.g. in return for a discount but not to another party, thus potentially levelling out any competitive advantage the service provider expects from certain user data, for which he grants a benefit to the user.

Last but not least, in the known prior art, each service provider is required to maintain their own data center and employ data experts to develop suitable evaluation routines to analyze the received data for any intended purpose.

Document WO 2017/190795 A1 proposes to utilize a peer-to-peer network for evaluating telemetry data, requiring the users to trust in the security and good conduct of not only a central instance, but rather all network nodes handling and evaluating his data. However, as a common characteristic in peer-to-peer networks, the user's data is distributed and shared amongst various nodes often not individually known to him, resulting in a reduced level of trust.

It is an object of the present invention to provide for a method for securely providing analytics results based on, preferably authenticated, data from a source to a single recipient, where the disadvantages of the state of the art are at least reduced. The invention also relates to a sensor device for providing authenticated data to be used preferably in the method according to the present invention.

This object is solved by the method according to independent claim 1 Preferred embodiments are the subject matter of the dependent claims.

The invention thus concerns a method for securely providing analytics results based on data from a source to a single intended recipient, wherein the source's owner and the recipient are linked by a contract with a trusted third party monitoring the compliance of the contract, comprising the permanent execution of the steps:
- securely transmitting raw data from the source to a server of the trusted third party;
- encrypting all raw data received by the server with a first encryption key provided by the source's owner;
and further comprising the execution of the following steps, in case of a contract between the source's owner and the recipient being concluded:
- the source's owner providing the server with a first decryption key allowing the server to decrypt the raw data required for the analytics necessary for the server to monitor the compliance of the contract;
- the server assessing the compliance of the contract based on predetermined criteria and encrypting the result of this assessment with a second encryption key provided by the source's owner before putting the result as movable asset into a block chain; and
- the source's owner providing the recipient with a second decryption key for decrypting the result of the assessment and thus enabling the intended recipient to retrieve the assessment results from the block chain as the sole recipient.

Furthermore, the invention relates to a sensor device comprising at least one sensor module to capture at least one characteristic of the sensor's surroundings as raw data, a communication module for transmitting the acquired raw data to a server and a processor for receiving the raw data of the at least one sensor module and forwarding the raw data to the server via the communication module, wherein the at least one sensor module comprises a pressure sensor with a precision of determining a vertical drop of 20 cm.

Before the invention is explained in detail, some terminology used in conjunction therewith is defined.

The term "source" encompasses all devices that can be assigned to a specific owner and that are actively sending detection, measurement or user-inputted data - i.e. raw data - to the server of the trusted third party. The devices may repeatedly, in predefined intervals or triggered by changes in the data send their raw data to the server.

The term "key" refers to asymmetric or symmetric keys for de- and/or encryption as well as digital signing of data. The term also comprises bundles of different but interrelated keys, e.g. each key of said bundle being used for encrypting or decrypting different parts of data, e.g. raw data assigned to a single owner.

The term "smart contract" designates an electronic protocol to facility and verify the conclusion and performance of a contract between two parties. Smart contracts may be cleared by a third party.

The present invention provides for a method, where an owner and a recipient can enter into a contract with predefined conditions and criteria derivable from the data produced by the owner's data source, where the compliance with the contract's conditions is continuously monitored by a third party trusted by both the owner and the recipient.

In order to achieve this, the source of the owner at all times securely transmits its raw data to a server. In other words, all devices that can be assigned to a specific owner and thus collectively form the owner's source transmit the data they collected, e.g. via sensors, detectors or other input means, as raw data to the server run by the trusted third party.

If said devices of the source are connected to the internet, the devices may transmit their data by using a secure transmission protocol, e.g. Hypertext Transfer Protocol Secure (HTTPS), File Transfer Protocol Secure (FTPS), SSH File Transfer Protocol (SFTP), Transport Layer Security (TLS) or the like.

The data transmitted may also include a unique identifier and a timestamp. Said identifier may be unique for every device as part of a source ("unique device identifier", e.g. a media access control (MAC) address) or a common identifier shared by all devices of a source ("unique source identifier"), both allowing the mapping of the data to a specific owner. The timestamp is preferably suitable to determine the time of the actual acquisition of the data and to be converted into a common, predefined time scheme, e.g. Coordinated Universal Time (UTC) .

In order to assign the data received by the server to a specific owner, it is preferred that the owner uses a private key to digitally sign the unique device identifier of a device owned by him and transmits this signed unique device identifier to the server. The server is then able to verify the digital signature on the signed unique device identifier by means of the public key corresponding to said private key and consequently assigns all data received with said unique identifier to said owner. The digital signature may have be validated and/or renewed on a regular basis.

For the owner to sign the unique device identifier, he may, for example, use an app on a mobile device, e.g. a smartphone. For digitally signing a unique identifier, the app first either imports or creates the private and public key of the owner. Subsequently, the user may manually enter, scan by using the mobile device's camera or select from a list provided by the app or the server based on all potential devices in the vicinity (e.g. being connected to the same Wi-Fi-Network as the mobile device) the unique identifier of the device to be signed. The signed unique device identifier as well as the public key may then be transmitted to the server to be further processed as described.

In general, the data received by the server from the source of an owner is instantly encrypted with a first encryption key provided by the sources owner. The encryption key might be identical to the public key used for verifying the digital signature of a unique device identifier (see above) or may comprise a bundle of keys, each used for encrypting different parts of the data received. As a result, the data acquired by the devices of the source are first securely transmitted and then stored in a secure, i.e. encrypted manner on the server.

The immediate encryption of the data may, if agreed to by the owner, be suspended for a given time in order for the server to be able to initially analyze the raw data to potentially identify certain patterns in the data that might reflect certain aspects of the owner's usual behavior which might be the basis of a condition of a contract and thus a criteria to be validated later on by the server. The time for the immediate encryption to be suspended might be a fixed amount of time set by the owner or run as long as one or more patterns found in the data are sufficiently consolidated. Once said initial pattern analysis is concluded, the raw data is encrypted with the first encryption key provided by the source's owner immediately after receipt.

In case the raw data is initially analyzed, the trusted third party may inform potential recipients what analytics results are available for assessing the compliance of a contract with a specific owner. In other words, the potential recipients learn from the third party which aspects of an owner's behavior may be deductible from the data received, especially based on the patterns found therein, to form the basis for any condition to be agreed upon in a contract that can be validated by the server. However, the recipient does not receive any further information on the owner and his behavior. Explicitly, no raw data or pattern information is - at any time - provided to a potential or actual recipient by the trusted third party.

Based on the described data collection, the owner may enter a contract with a chosen recipient, wherein the contract comprises certain conditions that are derivable from the data provided by the owner's source by the server of the trusted third party. With the help of the trusted third party the recipient can be ensured that the owner complies with the conditions agreed upon.

In order to allow the server of the trusted third party to evaluate the raw data provided by the owner's source to verify the owner's compliance with the contract, the source's owner provides the server with a first decryption key that allows the server to decrypt at least those parts of the owner's source required for the analytics necessary to monitor the compliance of the contract. Preferably, the data not required for these analytics may not be successfully decrypted by the first decryption key and thus remains confidential. This may easily be achieved if various part of the raw data being encrypted with different keys, so that the owner may only provide keys to the trusted third party suitable for decrypting the part of the raw data actually required.

Once the data is decrypted, the actual compliance with the contract may be assessed by means of predefined criteria, e.g. by determining deviations from a pattern discovered during the initial analysis or any perpetuated pattern based thereupon. The result may, for example, comprise a simple positive or negative statement, a grade or any other coding scheme, whether the owner stayed within prescribed limits for a deviation from a given pattern found in his raw data. Solely the result of this assessment - but not any interim results or even source data - is then encrypted by with a second encryption key provided by the source's owner before the server puts the result as a movable asset into a block chain accessible by the recipient.

The single recipient chosen by the owner by means of concluding the contract may retrieve the encrypted assessment result from the block chain and decrypt the assessment result with the help of a second decryption key provided to him by the source's owner, verifying the owner's compliance with the contract.

The inventive method has several technical advantages over the known state of the art.

Apart from a potential initial analysis phase, any raw data after being securely transmitted from the actual source to the server of the trusted third party is immediately encrypted by an encryption key provided by the owner. As a result, even the trusted third party is not able to access the information provided therein without the owner's consent, which is conveyed by the owner providing a first decryption key allowing the third party server to decrypt at least parts of the stored raw data. In case the owner would like to retract the permission to decrypt parts of said data, he can either retract the first decryption key (secure technologies for which are known in the prior art) or change the first encryption key, thus rendering the previously provided first decryption key useless. As long as the owner trusts the third party to immediately encrypt any received raw data with the encryption key provided by him, the owner stays in full control of the data being technically accessible even by the trusted third party itself.

The actual processing of released raw data in order to assess the compliance with a specific contract is conducted solely by the third party server, so that no source data or intermediate results need to be transmitted to e.g. the recipient. Consequently, the later recipient does not require to provide for any facilities to analyze raw data coming from owners' sources. The recipient is thus relieved from having to maintain extensive processing capabilities.

The combination of encryption the results of the assessment by a second encryption key provided by the source's owner and using a block chain between the server of the trusted third party and the recipient has two major advantages. By using block chain technology, both the owner and the recipient are assured that the assessment result agreed upon as part of a contract cannot be freely multiplied and used by various entitled or non-entitled entities, but are only moved once from the trusted third party to the intended single recipient. Furthermore, due to the owner being required to provide the second decryption key to the recipient, he has still full control of the assessment results. By retracting said second decryption key e.g. according to established technologies or by changing the second encryption key, the owner can - at any point - disable the recipient's ability to access at least future assessment results provided by the trusted third party.

As can easily be gathered, the source's owner has at least two possibilities to interrupt the information flow from his source to the single recipient by trackable technical means. The single recipient may interrupt the information flow by no longer accepting block chain transactions of assets from the trusted third party regarding a specific owner, which is - as being the omission of a technical step - fully trackable as well.

In all cases of an intended interruption in information flow, the trusted third party may inform the parties involved, since this may affect the validity of the contract between the owner and the recipient and require adjustment. In case the contract is a smart contract, whose clearing has been provided by the trusted third party, the trusted third party might also retract any electronic clearing previously provided, in case the assessment results in a non-compliance of the contract by the owner. In this case, the contract between the owner and the recipient is automatically terminated or specific provisions provided therein for the case of a clearing being retracted apply.

While the method, as explained so far, provides for secure transmission and processing of data from an owner's source raw data to only analytics results being made available to an intended recipient, a potentially desirable method for securing the authenticity of the raw data has not yet been addressed. The method of securing the authenticity of raw data gathered by a sensor device as explained in the following may be patent-worthy on its own, i.e. separate from the processing of raw data from an owner's source.

In order to authenticate at least part of the raw data provided by an owner's source, it is preferred that the source's raw data is at least partially provided by an internet-connected sensor device with at least one sensor to capture the sensor's surroundings, wherein the sensor device comprises means for determining its altitude, preferably with a precision sufficient to detect a vertical drop of 20 cm. Said sensor device is intended to be permanently positioned at a predetermined location and not to be moved by the owner, e.g. to a place where more favorable measurement results are expected. Furthermore, the sensor device is preferably connected to the internet via Wi-Fi, thus allowing the determination of its approximate location via known Wi-Fi geolocation services.

The means for determining the altitude of the sensor device might comprise a pressure sensor to precisely measure the ambient pressure. Even if uncalibrated, the pressure sensor is already able to detect sudden changes in pressure which - above certain thresholds - cannot stem from usual natural causes (i.e. changes in the weather) but have to be assumed to be caused by repositioning of the sensor device. The precision of the pressure sensor preferably allows for detecting vertical drops of 20 cm.

However, it is preferred to calibrate said pressure sensor to reflect an absolute altitude. This may be achieved in an initialization process potentially being conducted concurrently to register the sensor devices unique identifier with the trusted third party (see above). Modern smartphones as one example of an owner's mobile devices used for registering the sensor device usually comprise a precise pressure sensor to provide precise altitude information to the user even when indoors, i.e. without reception of satellite navigation signals. The pressure sensor of a smartphone being constantly gauged by satellite navigation signals, if available, may be used for in turn calibrate the pressure sensor of the sensor device, if the mobile device can be assumed to be near the sensor device during initialization, e.g. by being connected to the same Wi-Fi-Network or because the unique identifier of the sensor device is optically transferred to the integrated camera of the mobile device. This helps to assure that the sensor device is e.g. installed in the owner's flat of apartment building instead of in the flat of a neighbor below or above with a healthier lifestyle. The calibration data may be stored directly in the sensor device or at the server of the trusted third party to translate the raw data provided by the pressure sensor of the sensor device into an absolute altitude.

It is preferred if the sensor device provides a warning to the server or the server generates a warning based on received altitude measurements in case the sensor device's altitude is changed in a way not explainable by e.g. weather phenomena. In this case, the authenticity of the received raw data, at least coming from said sensor device, may be doubted.

It is preferred whenever an owner's mobile internet-connected device enters a predetermined geographical location, identification information of its internet access point is securely transmitted to the server to be compared with the identification information of internet access point of those sensor devices supposed to be at the predetermined geographical location regularly transmitted to the server by the sensor devices and creating a warning in case a sensor device is not found to be in the expected geographical location. In other words, the known technology of geo-fencing for mobile devices based on satellite navigation signals, GSM localization and/or connectivity to a Wi-Fi-Network is used for determining the general location of sensor devices at that location have not been altered, at least not significantly. The internet access point is preferably a Wi-Fi-access point, allowing the comparison of the mobile device and the sensor devices to be based on the SSID or any other identifier of the Wi-Fi-Network the devices are connected to. Alternatively or in addition, the public IP address of an internet access point, e.g. a router may be facilitated, to account for wired devices. Either way, it can be reviewed if a sensor device is actually installed in the intended location, e.g. the owner's home. Only if the sensor device is actually located in the owner's home, will the owner's mobile device be regularly registered via the same Wi-Fi-Network and/or internet access point as the sensor devices, particularly during night times.

The invention is now described in more detail in conjunction with the enclosed drawing. It shows:

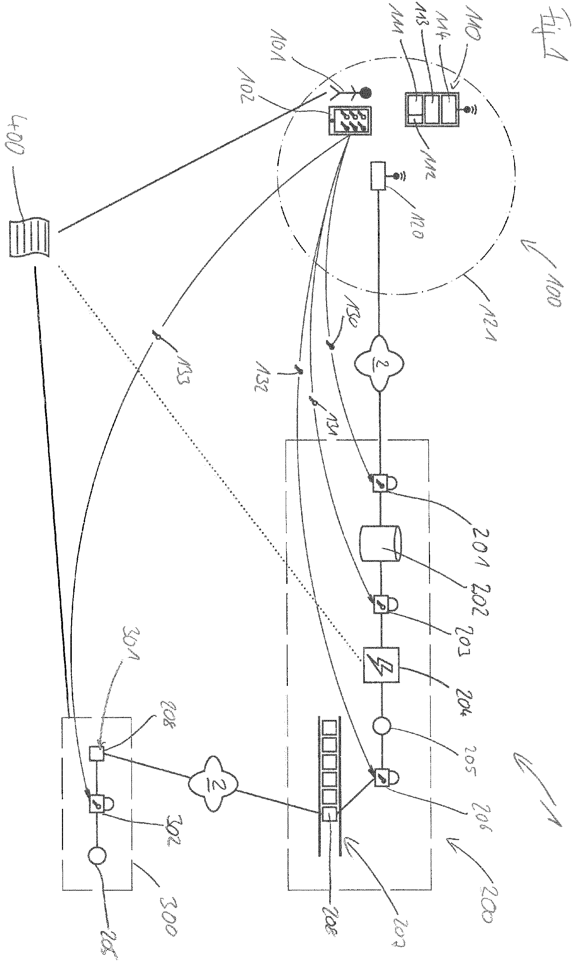

- Figure 1:: a schematic drawing of an arrangement comprising a sensor device and executing a method, both according to the invention.

Figure 1 depicts an arrangement 1 comprising an owner's source 100 with a sensor device 110 according to the present invention, a server 200 of a trusted third party and a recipient 300, on which the method according to the invention is executed.

In this example, to facilitate conciseness, the source 100 assigned to a specific owner 101 is shown to be composed of a single sensor device 110 only, although typically a plurality of sensor devices 110 are used. Furthermore, other internet-connected devices, like wearables, Smart-TVs, etc., might contribute data on usage or other aspects to the owner's source 100.

At the owner's source 100 an internet access point 120 is provided that establishes a local wireless network, in this case according to the Wi-Fi or IEEE 802.11 Standards, whose range is indicated by the dot-dashed line 121.

Within the range 121 of the internet access point 120, the sensor device 110 is positioned. It comprises a sensor module 111 with a high-precision pressure sensor 112, a processor 113 to process the data acquired by the sensor module 111 and a communication module 114 suitable for establishing a connection to the internet access point 120 and thus transferring data over the internet 2 to the server 200, which will be explained later.

Apart from the pressure sensor 112 the sensor module 111 comprises a plurality of additional sensors to detect characteristic of the sensor's surroundings, like temperature and light sensors, etc. All data acquired by the sensor module 111 is timestamped and supplemented with the sensor devices 110 unique identifier by the processor 113, before being sent to the server 200. The processor 113 also sends the network identifier determined by the communication module 114 (e.g. the SSID of a Wi-Fi-Network) together with the unique identifier to the server 200 either on regular basis or whenever the network identifier changes.

The actual transmission of data from the owner's source 100 to the server is secured by e.g. SSL- or TLS-encrypted data transmission.

In order to register the sensor device 110 as belonging to the owner 101 and to regularly authenticate the data acquired by the device 110, the owner 101 initially registers the sensor device 110 as his with the server 200. To do this, the owner 101 uses his mobile device 102, i.e. his smartphone, to run an app which takes a photograph of a graphical representation of the device's unique identifier, e.g. a bar- or QR-code, determines the unique identifier from said photograph, signs the unique identifier with a private key created by the app and transmits the digitally signed unique identifier together with the appropriate public key 130 to the server 200. Consequently, the server 200 can map any data received from the source 100 to its owner 101.

Due to the owner's mobile device 102 being in close vicinity to the sensor device 110 for the initial registration due to the required photo to be taken, the altitude measurement usually provided by the mobile device 102 may be used for calibration of the pressure sensor 112 of the sensor device 110. For this, the altitude determined by the mobile device 102 when said photo is taken is transferred to the server 200 to be put in context with the received pressure reading of the sensor device 110 at the same time. After this, the pressure readings of the sensor device 110 may be transferred into the actual altitude of the sensor device 110, at least when taking into account weather and/or temperature effects.

Notwithstanding a possible calibration of the pressure sensor 112 of the sensor device 110, the sensor 112 is capable of detecting vertical drops of 20 cm. In case the processor 113 detects such a vertical drop, a warning that the sensor device 110 has likely been moved, is generated and transmitted to the server 200 for further consideration, e.g. flagging the data received from the respective sensor device 110 no longer being reliable.

Similarly, the server 200 may verify the owner 101 regularly being near the sensor device 110, thus ensuring the data generated by the sensor device 110 actually reflecting the owner 101. For this, the owner's mobile device 102 is equipped with a geo-fencing application that transmits to the server 200 the network identification of the wireless network the mobile device 102 is momentarily connected to, whenever the geographic location of the mobile device 102 corresponds to e.g. the owner's home address. The server 200 may compare the network identifier received from the mobile device 102 with the network identifier received from the sensor device 110. If both identifiers match, it may be assumed that the sensor device 110 is installed at e.g. the owner's home address.

Apart from a possible initialization phase, where the raw data securely transmitted from the source 100 to the server 200 to run initial analysis to e.g. determine patterns in the data, after receipt of the raw data by the server 200, it is immediately encrypted with a first encryption key 130 provided to the server 200 by the owner 101 (or the owner's mobile device 102 to be precise) by a first encryption module 201. In the present example, the first encryption key 130 is identical to the public key used for digitally signing the unique device identifier of the sensor device 110 (see above).

Only the encrypted raw data is stored in the server's 200 data repository 202 and thus, in principle, not even accessible by the trusted third party operating the server 200.

In the present example, the source's owner 101 has entered a contract 400, e.g. a health insurance contract, with a recipient 300, e.g. an insurance company, that offers him a discount as long as he observes certain behavioral provisions whose compliance can be verified by the data acquired by the sensor device 110, e.g. regularly indulging in sufficient night's rest.

The server 200, precisely its processor 204, is provided with criteria to sufficiently assess the compliance of the owner 101 with the contract 400. For example, a criteria might be the requirement for the sensor device 110 to determine darkness in its surrounding for a specified time length in at least 90% of the nights, the owner 101 spends at home according to the above-explained geo-fencing application. This, when correlated with changes in CO₂ output in the same location (for example, the bedroom) along with micro seismic detection of sleep movements, may, in addition, also indicate how long and with what quality the occupant sleeps in that location.

In order for the server 200 to be able to assess the compliance of the owner 101 with the criteria provided, the owner 101 provides the server 200 with a first decryption key 131 to be used by decryption module 203 to decrypt the raw data initially provided by the sensor device 110 and stored in the data repository 202 that is actually needed for the verification of the provided criteria. The remaining raw data provided by the sensor device 110 remains encrypted. Preferably, said remaining raw data cannot even be decrypted by use of the provided first decryption key but required a different decryption key.

Subsequently, the decrypted data is examined whether the provided criteria is fulfilled or, if not, how big the deviation is. This examination leads to the analytics result 205, which solely contains information to what extend the provided criteria is fulfilled or not, but no intermediate result or even raw data leading to said result.

The analytics results 205 are encrypted by the encryption module 206 with a second encryption key 206 provided by the owner 101 or his mobile device 102 respectively, before being put in a block chain 207 as a movable (but not copy-able) asset 208.

Since the analytics results 205 being stored as an asset 208 of a block chain 207, it may be transferred only once to a recipient 300 via the internet 2, but is not freely available to numerous potential recipients.

The intended single recipient 300, which is a party to the contract 400, may have the asset 208 moved into his wallet 301 and is consequently assured that no other recipient has access to the asset 208.

In order for the recipient 300 to access the analytics results 205 within the movable asset 208 after it being moved into his wallet 301, the recipient 300 required the owner 101 to provide him with a second decryption key 133 in order for the decryption module 302 to decrypt the encrypted analytics results 205.

As can be seen from figure 1, the owner 101 can be assured solely by technical means that the actual recipient 300 that is partner to a mutual contract is provided only with selected information, i.e. the analytics results 205, but not with any additional data acquired by the owner's source 100. Furthermore, the owner 101 has various technical means to prevent any information being processed by the trusted third party or transmitted to the recipient 300 by changing one or more keys. For example, a change of the encryption keys 130 or 132 at a specific time, usually renders all data encrypted afterwards unusable for the trusted third party and/or the recipient 300, unless they are provided with an updated decryption key 131 and/or 133.

Although not shown in figure 1, the server 200 of the trusted third party may of course work with a plurality of owner's sources 100 and recipients 300, allowing for various contracts to be concluded between the different participants. Providing a server 200 by the trusted third party that is capable of running the required analyses and providing the recipients 300 with the desired analytics results 205, actively released by the owner 101, allows for saving otherwise required computational power at each potential recipient 300.

## Claims

1. Method for securely providing analytics result (205) based on data from a source (100) to a single intended recipient (300), wherein the source's owner (101) and the recipient (300) are linked by a contract (400) with a trusted third party monitoring the compliance of the contract (400), comprising the permanent execution of the steps:
- securely transmitting raw data from the source (100) to a server (300) of the trusted third party;
- encrypting all raw data received by the server (300) with a first encryption key (130) provided by the source's owner (101);
and comprising the execution of the following steps, in case of a contract (400) being concluded:
- the source's owner (101) providing the server (200) with a first decryption key (131) allowing the server (200) to decrypt the raw data required for the analytics necessary to monitor the compliance of the contract (400) ;
- the server (200) assessing the compliance of the contract (400) based on predetermined criteria and encrypting the result of this assessment (205) with a second encryption key (132) provided by the source's owner (101) before putting the result as movable asset (208) into a block chain (207); and
- the source's owner (101) providing the recipient (300) with a second decryption key (133) for decrypting the result of the assessment (205) and thus enabling the intended recipient (300) to retrieve the assessment results (205) from the block chain (207) as the sole recipient (300).

2. Method according to claim 1,
**characterized in that**
the server (200) analyses the received raw data before encryption to identify data patterns for a predetermined amount of time or until one or more patterns are consolidated.

3. Method according to claim 2,
**characterized in that**
the trusted third party informing potential recipients (300) what analytics result for a source's owner (101) are available for assessing the compliance of a contract (400).

4. Method according to one of the preceding claims,
**characterized in that**
the raw data from the source (100) comprises a unique identifier that is preferably mapped to an owner (101) by a copy of the unique identifier signed with a private key of the source's owner (101) and verifiable by the server (200) with a public key of the source's owner (101), preferably the first encryption key.

5. Method according to one of the preceding claims,
**characterized in that**
the secure transmission of raw data is effected over the Internet (2) by use of a secure transmission protocol.

6. Method according to one of the preceding claims,
**characterized in that**
the source's (100) raw data is at least partially provided by an internet-connected sensor device (110) that comprises means for determine its altitude.

7. Method according to claim 6,
**characterized in that**
the sensor device (11) provides a warning to the server (200) or the server (200) generates a warning based on received altitude measurements in case the sensor device's (110) altitude is changed.

8. Method according to claim 6 or 7,
**characterized in that**
whenever an owner's mobile internet-connected device (102) enters a predetermined geographical location, identification information of its internet access point (120) is securely transmitted to the server (200) to be compared with identification information of the internet access point (120) of those sensor devices (110) supposed to be at the predetermined geographical location regularly transmitted to the server (200) by the sensor device (110) and creating a warning in case a sensor device (110) is not found to be in the expected geographical location.

## Patentansprüche

1. Verfahren zur sicheren Bereitstellung eines Ergebnisses einer Bewertung (205) auf der Grundlage von Daten von einer Quelle (100) an einen einzigen vorgesehenen Empfänger (300), wobei der Eigentümer der Quelle (101) und der Empfänger (300) durch einen Vertrag (400) mit einer vertrauenswürdigen dritten Partei verbunden sind, die die Einhaltung des Vertrags (400) überwacht, umfassend die permanente Ausführung der Schritte:
- sichere Übertragung von Rohdaten von der Quelle (100) zu einem Server (300) der vertrauenswürdigen dritten Partei;
- Verschlüsselung aller vom Server (300) empfangenen Rohdaten mit einem ersten Verschlüsselungsschlüssel (130), der vom Eigentümer der Quelle (101) bereitgestellt wird;
und umfassend die Durchführung der folgenden Schritte, wenn ein Vertrag (400) geschlossen wird:
- der Eigentümer der Quelle (101) stellt dem Server (200) einen ersten Entschlüsselungsschlüssel (131) zur Verfügung, der es dem Server (200) ermöglicht, die Rohdaten zu entschlüsseln, die für die zur Überwachung der Einhaltung des Vertrags (400) erforderlichen Analysen erforderlich sind;
- der Server (200) bewertet die Einhaltung des Vertrags (400) auf der Grundlage vorbestimmter Kriterien und verschlüsselt das Ergebnis dieser Bewertung (205) mit einem zweiten Verschlüsselungsschlüssel (132), der vom Eigentümer der Quelle (101) bereitgestellt wird, bevor das Ergebnis als beweglicher Vermögenswert (208) in eine Blockchain (207) eingestellt wird; und
- der Eigentümer der Quelle (101) stellt dem Empfänger (300) einen zweiten Entschlüsselungsschlüssel (133) zur Verfügung, um das Ergebnis der Bewertung (205) zu entschlüsseln und so den vorgesehenen Empfänger (300) in die Lage zu versetzen, das Ergebnis der Bewertung (205) aus der Blockchain (207) als einziger Empfänger (300) abzurufen.

2. Verfahren nach Anspruch 1,
**dadurch gekennzeichnet, dass**
der Server (200) die empfangenen Rohdaten vor der Verschlüsselung analysiert, um Datenmuster für eine vorbestimmte Zeitspanne oder bis zur Konsolidierung eines oder mehrerer Muster zu identifizieren.

3. Verfahren nach Anspruch 2,
**dadurch gekennzeichnet, dass**
die vertrauenswürdige dritte Partei potenzielle Empfänger (300) darüber informiert, welche Ergebnisse der Bewertung für den Eigentümer einer Quelle (101) zur Bewertung der Einhaltung eines Vertrags (400) verfügbar sind.

4. Verfahren nach einem der vorhergehenden Ansprüche,
**dadurch gekennzeichnet, dass**
die Rohdaten von der Quelle (100) eine eindeutige Kennung umfassen, die vorzugsweise durch eine Kopie der eindeutigen Kennung, die mit einem privaten Schlüssel des Eigentümers (101) der Quelle signiert und durch den Server (200) mit einem öffentlichen Schlüssel des Eigentümers (101) der Quelle, vorzugsweise dem ersten Verschlüsselungsschlüssel, verifizierbar ist, einem Eigentümer (101) zugeordnet ist.

5. Verfahren nach einem der vorhergehenden Ansprüche, **dadurch**
**gekennzeichnet, dass**
die sichere Übertragung der Rohdaten über das Internet (2) unter Verwendung eines sicheren Übertragungsprotokolls erfolgt.

6. Verfahren nach einem der vorhergehenden Ansprüche, **dadurch**
**gekennzeichnet, dass**
die Rohdaten der Quelle (100) zumindest teilweise von einer mit dem Internet verbundenen Sensorvorrichtung (110) bereitgestellt werden, die Mittel zur Bestimmung ihrer Höhe umfasst.

7. Verfahren nach Anspruch 6,
**dadurch gekennzeichnet, dass**
die Sensorvorrichtung (11) eine Warnung an den Server (200) übermittelt oder der Server (200) eine Warnung auf der Grundlage empfangener Höhenmessungen erzeugt, wenn sich die Höhe der Sensorvorrichtung (110) ändert.

8. Verfahren nach Anspruch 6 oder 7,
**dadurch gekennzeichnet, dass**
jedes Mal, wenn ein mobiles, mit dem Internet verbundenes Gerät (102) eines Eigentümers einen vorbestimmten geografischen Ort betritt, Identifikationsinformationen seines Internetzugangspunkts (120) sicher an den Server (200) übertragen werden, um mit Identifikationsinformationen des Internetzugangspunkts (120) derjenigen Sensorvorrichtungen (110) verglichen zu werden, von denen angenommen wird, dass sie sich an dem vorbestimmten geografischen Ort befinden, der regelmäßig von der Sensorvorrichtung (110) an den Server (200) übertragen wird, und eine Warnung erzeugt wird, falls festgestellt wird, dass sich eine Sensorvorrichtung (110) nicht an dem erwarteten geografischen Ort befindet.

## Revendications

1. Méthode pour fournir en toute sécurité un résultat analytique (205) basé sur des données provenant d'une source (100) à un seul destinataire (300), dans laquelle le propriétaire de la source (101) et le destinataire (300) sont liés par un contrat (400) avec un tiers de confiance contrôlant la conformité du contrat (400), comprenant l'exécution permanente des étapes:
- transmettre en toute sécurité des données brutes de la source (100) à un serveur (300) du tiers de confiance;
- chiffrer toutes les données brutes reçues par le serveur (300) à l'aide d'une première clé de chiffrement (130) fournie par le propriétaire de la source (101);
et comprenant l'exécution des étapes suivantes, en cas de conclusion d'un contrat (400):
- le propriétaire de la source (101) fournit au serveur (200) une première clé de décryptage (131) permettant au serveur (200) de décrypter les données brutes requises pour les analyses nécessaires au contrôle de la conformité du contrat (400);
- le serveur (200) évalue la conformité du contrat (400) sur la base de critères prédéterminés et crypte le résultat de cette évaluation (205) avec une seconde clé de cryptage (132) fournie par le propriétaire de la source (101) avant de placer le résultat en tant qu'actif mobilier (208) dans une chaîne de blocs (207); et
- le propriétaire de la source (101) fournit au destinataire (300) une deuxième clé de décryptage (133) pour décrypter le résultat de l'évaluation (205) et permettre ainsi au destinataire prévu (300) de récupérer les résultats de l'évaluation (205) dans la chaîne de blocs (207) en tant que seul destinataire (300).

2. Méthode selon la revendication 1,
**caractérisé en ce que**
le serveur (200) analyse les données brutes reçues avant le cryptage afin d'identifier des modèles de données pendant une durée prédéterminée ou jusqu'à ce qu'un ou plusieurs modèles soient consolidés.

3. Méthode selon la revendication 2,
**caractérisé en ce que**
le tiers de confiance informe les destinataires potentiels (300) des résultats analytiques disponibles pour le propriétaire d'une source (101) afin d'évaluer la conformité d'un contrat (400).

4. Méthode selon l'une des revendications précédentes,
**caractérisé en ce que**
les données brutes de la source (100) comprennent un identifiant unique qui est de préférence associé à un propriétaire (101) par une copie de l'identifiant unique signée avec une clé privée du propriétaire de la source (101) et vérifiable par le serveur (200) avec une clé publique du propriétaire de la source (101), de préférence la première clé de cryptage.

5. Méthode selon l'une des revendications précédentes,
**caractérisé en ce que**
la transmission sécurisée des données brutes est effectuée sur l'Internet (2) au moyen d'un protocole de transmission sécurisé.

6. Méthode selon l'une des revendications précédentes,
**caractérisé en ce que**
les données brutes de la source (100) sont au moins partiellement fournies par un dispositif de détection (110) connecté à Internet qui comprend des moyens pour déterminer son altitude.

7. Méthode selon la revendication 6,
**caractérisé en ce que**
le dispositif de détection (110) fournit un avertissement au serveur (200) ou que le serveur (200) génère un avertissement sur la base des mesures d'altitude reçues en cas de modification de l'altitude du dispositif de détection (110).

8. Méthode selon la revendication 6 ou 7,
**caractérisé en ce que**
chaque fois que l'appareil mobile propriétaire (102) connecté à l'internet entre dans un lieu géographique prédéterminé, les informations d'identification de son point d'accès à l'internet (120) sont transmises en toute sécurité au serveur (200) pour être comparées aux informations d'identification du point d'accès à l'internet (120) des dispositifs de détection (110) censés se trouver dans le lieu géographique prédéterminé, régulièrement transmises au serveur (200) par le dispositif de détection (110), et pour créer un avertissement au cas où un dispositif de détection (110) ne se trouverait pas dans le lieu géographique prévu.
